# EUROPÄISCHE PATENTANMELDUNG

(11) **EP 1 881 228 A2**
(43) Veröffentlichungstag der Anmeldung: **23.01.2008**
(21) Anmeldenummer: 07013330.1
(22) Anmeldetag: 07.07.2007
(51) Int. Cl.: F16F 15/123, F16H 55/36

(54) **Antriebsscheibe zum Antreiben eines Nebenaggregats durch eine Antriebswelle eines Antriebsaggregats**

(30) Priorität: 20.07.2006 DE 102006033551
(71) Anmelder: ZF Friedrichshafen AG, 88038 Friedrichshafen (DE)
(72) Erfinder: Wickel, Christian, 97797 Wartmannsroth (DE); Lindner, Joachim, 97456 Hambach-Dittelbrunn (DE)

(57) **Zusammenfassung**

Bei einer Antriebsscheibe zum Antreiben eines Nebenaggregats durch eine Antriebswelle eines Antriebsaggregats umfasst die Antriebsscheibe (10) eine Torsionsschwingungsdämpferanordnung (16) mit einem mit der Antriebswelle zu koppelnden Eingangsbereich (32) und einem durch eine Dämpferelementenanordnung (68) zur Drehung um eine Drehachse (A) mit dem Eingangsbereich (32) gekoppelten Ausgangsbereich (56), wobei der Eingangsbereich (32) zwei in Abstand zueinander angeordnete Deckscheibenelemente (18, 20) beidseits eines Zentralscheibenelements (58) des Ausgangsbereichs (56) umfasst, wobei das Zentralscheibenelement (58) an seinem radial inneren Endbereich (59) ein bezüglich der Deckscheibenelemente (18, 20) radial abgestütztes Lagerungselement (74) aufweist und in seinem radial äußeren Endbereich (72) mit einem Antriebsring (12) verbunden ist.

## Beschreibung

Die vorliegende Erfindung betrifft eine Antriebsscheibe zum Antreiben eines Nebenaggregats durch eine Antriebswelle eines Antriebsaggregats, wobei die Antriebsscheibe eine Torsionsschwingungsdämpferanordnung umfasst mit einem mit der Antriebswelle zu koppelnden Eingangsbereich und einem durch eine Dämpferelementenanordnung zur Drehung um eine Drehachse mit dem Eingangsbereich gekoppelten Ausgangsbereich.

Eine derartige Antriebsscheibe ist aus der DE 44 20 178 A1 bekannt. Diese Antriebsscheibe dient beispielsweise dazu, in einem Kraftfahrzeug vermittels eines Riemen- oder Kettenantriebs Nebenaggregate anzutreiben unter Ausnutzung der Rotation einer Kurbelwelle einer Brennkraftmaschine. Diese bekannte Antriebsscheibe ist so aufgebaut, dass der Eingangsbereich der Torsionsschwingungsdämpferanordnung ein Zentralscheibenelement umfasst, das radial innen an die Antriebswelle anzukoppeln ist und radial außen in einen zwischen zwei Deckscheibenelemente des Ausgangsbereichs gebildeten Zwischenraum eingreift. Das Zentralscheibenelement und die beiden Deckscheibenelemente sind über näherungsweise in Umfangsrichtung sich erstreckende Dämpferfedern miteinander zur Drehmomentübertragung und zur gemeinsamen Rotation um eine Drehachse gekoppelt. Eines der Deckscheibenelemente ist radial innen über ein Drehentkopplungslager radial abgestützt, und zwar bezüglich eines Bauteils, über welches auch das Zentralscheibenelement des Eingangsbereichs mit der Antriebswelle zu koppeln ist. Das andere Deckscheibenelement bildet in seinem radial äußeren Bereich mit einem von diesem axial sich wegerstreckenden näherungsweise zylindrischen Ansatz einen Antriebsring, der mit einem Antriebsriemen in Wechselwirkung tritt und diesen vorantreibt.

Aus der DE 42 25 304 A1 ist eine Antriebsscheibe zum Antreiben eines Nebenaggregats bekannt, bei welcher der mit der Antriebswelle zu koppelnde Eingangsbereich zwei Deckscheibenelemente umfasst, welche einen nach radial außen abgeschlossenen Aufnahmeraum für die Dämpferelementenanordnung, also beispielsweise Dämpferfedern, begrenzen. In diesen Raum greift von radial innen ein Zentralscheibenelement des Ausgangsbereichs ein und ist auf diese Art und Weise mit den Deckscheibenelementen zur Drehmomentübertragung gekoppelt. In seinem radial inneren Endbereich ist dieses Zentralscheibenelement mit einem Antriebsring durch Vernietung fest gekoppelt, welcher Antriebsring den wesentlichen axialen Erstreckungsbereich der Deckscheibenelemente übergreift und in seinem radial äußeren und außerhalb der Deckscheibenelemente liegenden Bereich zur Wechselwirkung mit einem Antriebsriemen ausgebildet ist. Radial innen ist dieser Antriebsring über ein Drehentkopplungslager an demjenigen Bauteil radial abgestützt, mit welchem auch eines der beiden Deckscheibenelemente des Eingangsbereichs durch Vernietung fest verbunden und somit an eine Antriebswelle anzukoppeln ist.

Es ist die Aufgabe der vorliegenden Erfindung, eine Antriebsscheibe zum Antreiben eines Nebenaggregats durch eine Antriebswelle eines Antriebsaggregats bereitzustellen, welche bei kompaktem Aufbau eine verbesserte Betriebscharakteristik aufweist.

Erfindungsgemäß wird diese Aufgabe gelöst durch eine Antriebsscheibe zum Antreiben eines Nebenaggregats durch eine Antriebswelle eines Antriebsaggregats, wobei die Antriebsscheibe eine Torsionsschwingungsdämpferanordnung umfasst mit einem mit der Antriebswelle zu koppelnden Eingangsbereich und einem durch eine Dämpferelementenanordnung zur Drehung um eine Drehachse mit dem Eingangsbereich gekoppelten Ausgangsbereich, wobei der Eingangsbereich zwei in Abstand zueinander angeordnete Deckscheibenelemente beidseits eines Zentralscheibenelements des Ausgangsbereichs umfasst, wobei das Zentralscheibenelement an seinem radial inneren Endbereich ein bezüglich der Deckscheibenelemente radial abgestütztes Lagerungselement aufweist und in seinem radial äußeren Endbereich mit einem Antriebsring verbunden ist.

Die erfindungsgemäße Antriebsscheibe ist also dadurch gekennzeichnet, dass das Zentralscheibenelement sowohl radial innen in Wechselwirkung mit dem Lagerungselement die Funktion der radialen Abstützung übernimmt, als auch radial außen die Funktion der Verbindung mit einem Antriebsring und somit der Wechselwirkung mit einem anzutreibenden Riemen oder einer anzutreibenden Kette oder dergleichen übernimmt. Es ist somit ein sehr kompakter Aufbau geschaffen. Gleichzeitig ist dieser Aufbau sehr stabil, so dass die auf derartige Antriebsscheiben allgemein einwirkenden seitlichen Kräfte nicht zu elementaren Verformungen führen können.

Beispielsweise kann vorgesehen sein, dass der Ausgangsbereich in Zuordnung zu jedem Deckscheibenelement eine Klemmscheibe aufweist, wobei die Klemmscheiben an den Außenseiten der Deckscheibenelemente angeordnet sind und die Deckscheibenelemente unter Zwischenlagerung von Distanzelementen aufeinander zu pressen. Dabei kann zum Erhalt einer weiter erhöhten Stabilität vorgesehen sein, dass jede Klemmscheibe eine zentrale Stützaussparung für das Lagerungselement aufweist. Um die Montage durch das Bereitstellen vorgefertigter Baugruppen vereinfachen zu können, wird vorgeschlagen, dass das Lagerungselement die Stützaussparungen der Klemmscheiben durchsetzt und dass an über die Klemmscheiben überstehenden axialen Endbereichen des Lagerungselements Axialsicherungselemente für die Klemmscheiben vorgesehen sind.

Wenn das Zentralscheibenelement im Bereich jedes Distanzelements eine langgestreckte Umfangsaussparung aufweist und mit seinem radial inneren Endbereich radial innerhalb der Distanzelemente liegt, dann ist einerseits die erforderliche Verdrehbarkeit des Eingangsbereichs bezüglich des Ausgangsbereichs gewährleistet, andererseits können die Distanzelemente gleichzeitig in Wechselwirkung mit den langgestreckten Umfangsaussparungen auch die Funktion einer Drehwinkelbegrenzung und somit eines Überlastungsschutzes für die Torsionsschwingungsdämpferanordnung erfüllen.

Dabei kann weiter vorgesehen sein, dass wenigstens ein Teil der Distanzelemente mit einer Durchgangsöffnung ausgebildet ist zur Hindurchführung eines Schraubbolzens, wobei die Schraubbolzen die Klemmscheiben mit den dazwischen angeordneten Deckscheibenelementen und Distanzelementen aufeinander zu pressen. Auf diese Art und Weise entstehen auch durch das Miteingliedern der Schraubbolzen, welche letztendlich den axialen Zusammenhalt der Eingangsseite gewährleisten, keine weiteren die erforderliche Verdrehbarkeit innerhalb der Torsionsschwingungsdämpferanordnung beschränkenden Bereiche.

An jeder Klemmscheibe kann ein das Zentralscheibenelement axial abstützendes Axiallagerorgan vorgesehen sein. Ferner kann an jeder Klemmscheibe ein das Lagerungselement radial abstützendes Radiallagerorgan vorgesehen sein. Dabei kann zum Erfüllen dieser axialen bzw. auch radialen Lagerungsfunktion bei einer bevorzugten Ausgestaltungsvariante vorgesehen sein, dass in Zuordnung zu jeder Klemmscheibe eine das Lagerungselement und das Zentralscheibenelement abstützende Axial/Radial-Lagerhülse vorgesehen ist.

Der dann auch im Betrieb erforderliche stabile Zusammenhalt innerhalb des Eingangsbereichs kann dann dadurch realisiert sein, dass an den Außenseiten der Klemmscheiben Abdeckscheiben vorgesehen sind, wobei die Schraubbolzen an den Abdeckscheiben angreifen.

Um dabei vor allem den Bereich der gegenseitigen Lagerung des Eingangsbereichs und des Ausgangsbereichs gegen den Eintritt von Verunreinigungen zu schützen, wird weiterhin vorgeschlagen, dass die Abdeckscheiben die Stützaussparungen der Klemmscheiben vollständig überdecken.

Eine der Abdeckscheiben kann einen Befestigungsbereich zur Festlegung derselben bezüglich einer Antriebswelle aufweisen.

Um auch von radial außen her den Eintritt von Verunreinigungen in den Bereich der gegenseitigen Lagerung von Eingangsbereich und Ausgangsbereich zu verhindern, wird weiter vorgeschlagen, dass an jeder axialen Seite des Zentralscheibenelements ein Abdichtelement vorgesehen ist, durch welches zwischen dem Zentralscheibenelement und der Eingangsseite ein gegen den Durchtritt von Verunreinigungen dichter Abschluss gebildet ist.

Das Zentralscheibenelement kann mit dem Lagerungselement materialschlüssig oder/und formschlüssig verbunden sein. Alternativ ist es möglich, dass das Zentralscheibenelement mit dem Lagerungselement integral ausgebildet ist.

Auch im Bereich der Verbindung des Zentralscheibenelements mit dem Antriebsring, also demjenigen Bereich der Antriebsscheibe, der in Antriebswechselwirkung mit einem Riemen, einem Zahnriemen oder einer Antriebskette tritt, kann die Verbindung in verschiedener Weise realisiert sein. So ist es beispielsweise möglich, dass das Zentralscheibenelement mit dem Antriebsring in einem axialen Mittenbereich des Antriebsrings integral oder materialschlüssig verbunden ist. Diese Ausgestaltungsform ist auf Grund der zentralen Anbindung des Zentralscheibenelements an den Antriebsring vor allem hinsichtlich der symmetrischen Krafteinleitung besonders vorteilhaft.

Bei einer alternativen Ausgestaltungsform kann vorgesehen sein, dass der Antriebsring einen nach radial innen ragenden Befestigungsbereich zur Festlegung an dem radial äußeren Endbereich des Zentralscheibenelements aufweist, wobei der Befestigungsbereich an dem Antriebsring bezüglich eines axialen Mittenbereichs desselben versetzt vorgesehen sein kann. Auf diese Art und Weise wird bei ebenfalls sehr kompakter Ausgestaltungsform eine größere Variabilität in der Einsetzbarkeit der erfindungsgemäßen Antriebsscheibe erlangt, da diese zur Eingliederung in verschiedene Antriebssysteme bzw. zur Kopplung auch mit verschiedenen Antriebsaggregaten in einfacher Art und Weise mit verschiedenen Antriebsringen, beispielsweise verschiedenen Durchmessers oder/und verschiedener Breite, gekoppelt werden kann.

Die vorliegende Erfindung wird nachfolgend mit Bezug auf die beiliegenden Zeichnungen detailliert beschrieben. Es zeigt:
- Fig. 1: eine perspektivische und teilweise geschnittene Darstellung einer erfindungsgemäß ausgestalteten Antriebsscheibe;
- Fig. 2: eine Axialansicht der Antriebsscheibe der Fig. 1;
- Fig. 3: eine Schnittansicht der in den Fig. 1 und 2 dargestellten Antriebsscheibe, geschnitten längs einer Linie III-III in Fig. 2;
- Fig. 4: eine der Fig. 3 entsprechende Schnittdarstellung, geschnitten längs einer Linie IV-IV in Fig. 3;
- Fig. 5: eine der Fig. 1 entsprechende perspektivische Schnittdarstellung einer alternativ ausgebildeten Antriebsscheibe;
- Fig. 6: eine Axialansicht der Antriebsscheibe der Fig. 5;
- Fig. 7: eine Längsschnittansicht der in den Fig. 5 und 6 dargestellten Antriebsscheibe, geschnitten längs einer Linie VII - VII in Fig. 6;
- Fig. 8: eine weitere Längsschnittdarstellung der Antriebsscheibe der Fig. 5 und 6, geschnitten längs einer Linie VIII - VIII in Fig. 6.

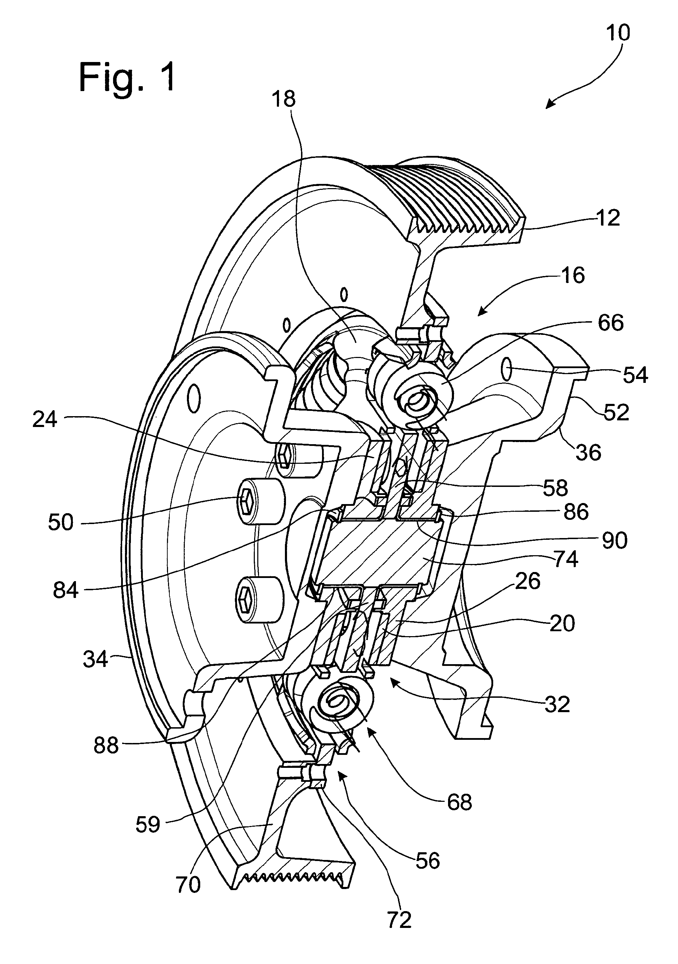

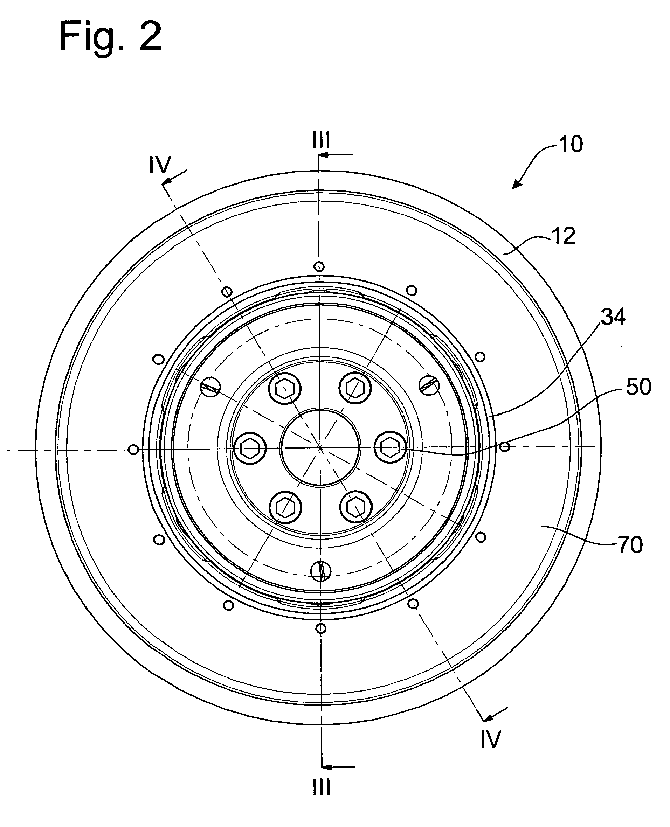

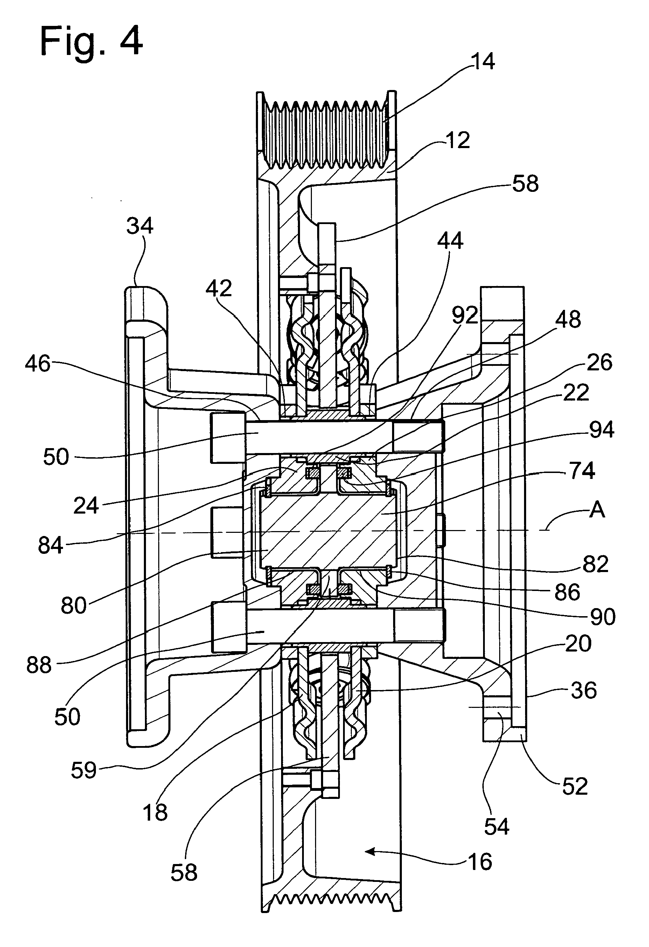

Eine erste Ausgestaltungsform einer erfindungsgemäßen Antriebsscheibe 10 wird nachfolgend mit Bezug auf die Fig. 1 bis 4 beschrieben. Diese Antriebsscheibe 10 weist in ihrem radial äußeren Bereich einen Antriebsring 12 auf, der, wie im oberen Teil der Fig. 4 angedeutet, in Wechselwirkung beispielsweise mit einem Antriebsriemen 14 tritt, um bei Rotation der Antriebsscheibe 10 um eine Drehachse A den Riemen 14 voranzutreiben und damit in einem Fahrzeug Nebenaggregate, wie z.B. eine Lichtmaschine, einen Klimaanlagenkompressor oder dergleichen, anzutreiben.

Die Antriebsscheibe 10 ist mit einer Torsionsschwingungsdämpferanordnung 16 ausgebildet. Diese umfasst zwei in axialem Abstand zueinander angeordnete Deckscheibenelemente 18, 20. Der erforderliche axiale Abstand der beiden Deckscheibenelemente 18, 20 wird durch Distanzelemente 22 hergestellt, die an mehreren Umfangspositionen zwischen den Deckscheibenelementen 18, 20 angeordnet sind. Dabei können die Distanzelemente 22 mit gestuft zylindrischer Außenform ausgebildet sein und mit ihren Endbereichen geringerer Außenabmessung in zugehörige Öffnungen der Deckscheibenelemente 18, 20 eingepasst sein. Die Deckscheibenelemente 18, 20 liegen dann an Radialschultern der Distanzelemente 22 an.

Jeweils an den axialen Außenseiten, also an den voneinander weggewandt liegenden Seiten der Deckscheibenelemente 18, 20, sind diese radial übergriffen von Klemmscheiben 24, 26. Jede der Klemmscheiben 24, 26 bildet einen Zentriervorsprung 28, 30 für das zugehörige Deckscheibenelement 18, 20, so dass im zusammengesetzten Zustand die Deckscheibenelemente 18, 20 radial bezüglich der Klemmscheiben 24, 26 zentriert gehalten sind.

Die Klemmscheiben 24, 26, die Deckscheibenelemente 18, 20 und die Distanzelemente 22 bilden die wesentlichen Komponenten 32 eines Eingangsbereichs 32 der Torsionsschwingungsdämpferanordnung 16. Dieser Eingangsbereich 32 ist an seinen beiden axialen Außenseiten wiederum überdeckt von Abdeckscheiben 34, 36. Diese liegen an den axialen Außenseiten der Klemmscheiben 24, 26 an und weisen ebenfalls Zentrierbereiche oder Zentrierschultern 38, 40, durch welche sie bezüglich der jeweils zugeordneten Klemmscheibe 24, 26 zentriert sind. Auf diese Art und Weise ist auch die radiale Zentrierung der Deckscheibenelemente 18, 20 bezüglich der Abdeckscheiben 34, 36 gewährleistet. In Zuordnung zu den Distanzelementen 22 weisen sowohl die Klemmscheiben 24, 26 als auch die Abdeckscheiben 34, 36 jeweilige Öffnungen 42, 44, 46, 48 auf. Durch diese Öffnungen sind Schraubbolzen 50 hindurchgeführt. Die in der Abdeckscheibe 36 vorgesehenen Öffnungen 48 sind Innengewindeöffnungen, in welche die Schraubbolzen 50 eingeschraubt sind, so dass ein axial fester Verbund der Distanzelemente 22, der Deckscheibenelemente 18, 20, der Klemmscheiben 24, 26 und der Abdeckscheiben 34, 36 realisiert ist.

Die Abdeckscheibe 36 ist in ihrem radial äußeren Bereich 52 zur Ankopplung der Antriebsscheibe 10 an eine Antriebswelle, also beispielsweise eine Kurbelwelle einer Brennkraftmaschine ausgebildet. Dort weist die Abdeckscheibe 36 mehrere Durchgangsöffnungen 54 auf, durch welche Schraubbolzen hindurchgeführt werden können und beispielsweise in einen Kurbelwellenflansch eingeschraubt werden können oder in eine andere bereits mit einer Antriebswelle gekoppelte Antriebsscheibe eingeschraubt werden können. Die Abdeckscheibe 34 kann beispielsweise zur Anbringung eines Ventilator-Flügelrades dienen, um Kühlluft für einen Fahrzeugkühler heranzufördern.

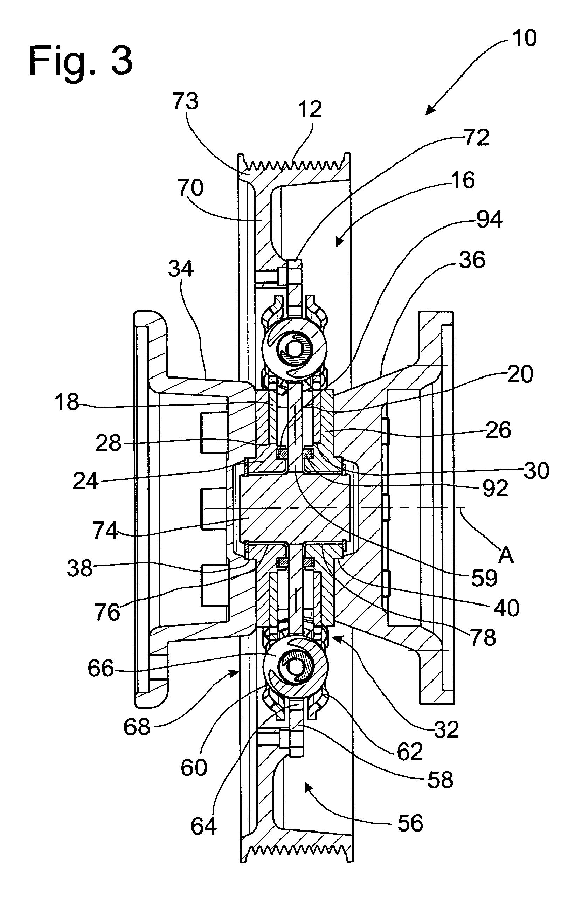

Die Torsionsschwingungsdämpferanordnung 16 weist als wesentlichen Bestandteil einer Ausgangsseite 56 derselben ein Zentralscheibenelement 58 auf. Dieses ist, wie vor allem in den Fig. 3 und 4 erkennbar, im Wesentlichen planar ausgebildet und liegt axial näherungsweise mittig zwischen den beiden Deckscheibenelementen 18, 20. In an sich bekannter Weise weisen die Deckscheibenelemente 18, 20 und das Zentralscheibenelement 58 jeweils Federfenster 60, 62, 64 auf, in welchen Dämpferfedern 66 einer allgemein mit 68 bezeichneten Dämpferelementenanordnung positioniert sind. Durch Abstützen dieser Dämpferfedern 66 in Umfangsrichtung an den bei den jeweiligen Federfenstern 60, 62, 64 gebildeten Abstützkanten sind der Eingangsbereich 32 und der Ausgangsbereich 56 zur Drehmomentübertragung miteinander gekoppelt, im Bereich der Kompressibilität der Dämpferfedern 66 jedoch gegeneinander um die Drehachse A verdrehbar.

Radial außen ist das Zentralscheibenelement 58 über nicht dargestellte Schraubbolzen oder dergleichen mit dem Antriebsring 12 gekoppelt. Zu diesem Zwecke weist dieser einen nach radial innen greifenden ringartigen oder flanschartigen Befestigungsbereich 70 auf, der an einer axialen Seite des radial äußeren Endbereichs 72 des Zentralscheibenelements 58 anliegt und dort mit diesem durch Verschraubung oder dergleichen fest verbunden ist. Man erkennt, dass zum Erhalt einer axial symmetrischen Positionierung des radial äußeren Bereichs 73 des Antriebsrings 12 bezüglich des Zentralscheibenelements 58 der Befestigungsbereich 70 bezüglich eines axialen Mittenbereichs des radial äußeren Bereichs 73 des Antriebsrings 12 versetzt ist, so dass dieser radial äußere Bereich 73 des Antriebsrings 12, welcher auch, wie in Fig. 4 erkennbar, in Wechselwirkung mit einem Riemen 14 tritt, bezüglich der Torsionsschwingungsdämpferanordnung 16 im Wesentlichen axial zentriert liegt.

Durch die voneinander getrennte Ausgestaltung des Zentralscheibenelements 58 und des Antriebsrings 12 wird es möglich, die Antriebsscheibe 10 leicht an verschiedene Einsatzzwecke anzupassen, indem beispielsweise für verschieden ausgestaltete Antriebsriemen oder Antriebsketten erforderliche Antriebsringe 12 dann an die Torsionsschwingungsdämpferanordnung 16 bzw. das Zentralscheibenelement 58 angekoppelt werden.

An seinem radial inneren Endbereich 59 ist das Zentralscheibenelement 56 mit einem bolzenartig ausgestalteten Lagerungselement 74 fest verbunden, beispielsweise durch Verschweißung, durch integrale Ausgestaltung oder ggf. auch durch Bereitstellung von ineinander eingreifenden Verzahnungen. Das axial bezüglich des Zentralscheibenelements 58 im Wesentlichen symmetrisch positionierte Lagerungselement 74 durchsetzt in den Klemmscheiben 24, 26 vorgesehene Stützaussparungen 76, 78. In seinen über diese Stützaussparungen 76, 78 hinausgreifenden axialen Endbereichen 80, 82 trägt das Lagerungselement 74 Sicherungsringe 84, 86, welche die Klemmscheiben 26, 28 an ihren axialen Außenseiten radial übergreifen und somit unabhängig davon, ob bereits eine axiale Zusammenfassung durch die Schraubbolzen 50 erfolgt ist, einen axialen Zusammenhalt der Torsionsschwingungsdämpferanordnung 16 mit ihren wesentlichen Komponenten, nämlich den beiden Klemmscheiben 24, 26, den Deckscheibenelementen 18, 20, den Distanzelementen 22 und dem in der Mitte liegenden Zentralscheibenelement 58 realisieren. Dies erleichtert die Montage einer erfindungsgemäßen Antriebsscheibe 10 bzw. deren Eingliederung in ein Antriebssystem.

Zwischen den Klemmscheiben 24, 26 und dem Lagerungselement 74 sind jeweils Lagerhülsen 88, 90 vorgesehen. Mit einem zwischen der Außenoberfläche des Lagerungselements 74 und einer jeweiligen Klemmscheibe 24 bzw. 26 liegenden zylindrischen Abschnitt bilden diese Lagerhülsen 88, 90 Radiallager, und mit zwischen den axialen Innenseiten der Klemmscheiben 24, 26 und den beiden axialen Seiten des Zentralscheibenelements 58 liegenden und im Wesentlichen radial sich erstreckenden Ringabschnitten bilden die Lagerhülsen 88, 90 Axiallager. Die Lagerhülsen 88, 90 sind aus Gleitlagermaterial hergestellt und ermöglichen somit eine definierte Relativdrehung der Eingangsseite 32 bezüglich der Ausgangsseite 56 der Torsionsschwingungsdämpferanordnung 16.

Man erkennt weiterhin, dass radial außerhalb der sich radial erstreckenden Bereiche der Lagerhülsen 88, 90 an den Klemmscheiben 24, 26 in Ringnuten eingesetzt Abdichtelemente 92, 94 angeordnet sind, die ebenfalls an den axialen Seiten des Zentralscheibenelements 58 anliegen. Diese beispielsweise als Filzringe ausgebildeten Abdichtelemente 92, 94 stellen somit einen dichten Abschluss zwischen der Eingangsseite 32 und der Ausgangsseite 56 her, so dass von radial außen beispielsweise in den Bereichen zwischen jeweiligen in Umfangsrichtung aufeinander folgenden Distanzelementen 22 keine Verunreinigungen in den Bereich der Lagerhülsen 88, 90, also der gegenseitigen Lagerung der Eingangsseite 32 und der Ausgangsseite 56, gelangen können. Ebenfalls erkennt man, dass die beiden Abdeckscheiben 34, 36, welche beidseits der Torsionsschwingungsdämpferanordnung 16 angeordnet sind, in ihrem zentralen und innerhalb der Öffnungen 46 bzw. 48 für die Schraubbolzen 50 liegenden Bereich geschlossen sind und somit insbesondere den Bereich der Stützaussparungen 76, 78 für das Lagerungselement 74 axial dicht abschließen. Auch hier ist insbesondere in Verbindung damit, dass die Abdeckscheiben 34, 36 im Wesentlichen vollflächig an den Außenseiten der Klemmscheiben 24, 26 anliegen, dafür gesorgt, dass in den Bereich der Lagerung des Lagerungselements 74 keine Verunreinigungen gelangen können.

Durch den erfindungsgemäßen Aufbau einer Antriebsscheibe 10 wird es möglich, bei vor allem axial sehr kompakter Ausgestaltung eine verbesserte Betriebscharakteristik dadurch zu erhalten, dass ein axial sehr symmetrischer Aufbau erhalten wird. Es können insbesondere im Bereich der Torsionsschwingungsdämpferanordnung 16 Standardbauteile eingesetzt werden, die beispielsweise auch in Kupplungsscheiben oder Zweimassenschwungrädern zum Einsatz gelangen können, was die Herstellungskosten verringert. Da vor allem der radial innerhalb der Verschraubung durch die Schraubbolzen 50 liegende Lagerungsbereich, in welchem der Eingangsbereich 32 bezüglich des Ausgangsbereichs 56 axial und radial gelagert ist, vollkommen gegen das Eintreten von Verunreinigungen abgekapselt ist, nämlich durch die Abdichtelemente 92, 94 einerseits und die den axialen Abschluss herstellenden Abdeckscheiben 34, 36 andererseits, wird weiterhin eine Beeinträchtigung der Betriebscharakteristik der Torsionsschwingungsdämpferanordnung 16 vermieden.

Es ist selbstverständlich, dass im Bereich der Torsionsschwingungsdämpferanordnung 16 verschiedenste Variationen vorgenommen werden können. So kann diese beispielsweise auch eine Reibeinrichtung aufweisen, mit welcher durch Einführen einer definierten coulombschen und ggf. auch verschleppt wirksamen Reibung auch das Schwingungsdämpfungsverhalten bzw. das Schwingungsentkopplungsverhalten gezielt beeinflusst werden kann. Weiterhin ist es selbstverständlich, dass vor allem durch die Wechselwirkung der Dämpferelemente 66 der Dämpferelementenanordnung 68 mit den Deckscheibenenelementen 18, 20 und dem Zentralscheibenelement 58 ein Einfluss auf die Dämpfungscharakteristik genommen werden kann. Es ist beispielsweise denkbar, bei einigen der Dämpferfedern 66 in Umfangsrichtung längere Federfenster in den Deckscheibenelementen 18, 20 oder im Zentralscheibenelement 58 vorzusehen. Dies hat zur Folge, dass diese Dämpferfedern 66 erst nach Durchlaufen eines bestimmten Drehwinkels wirksam werden, so dass hier eine gestufte Dämpfungscharakteristik erlangt wird. Auch können, wie dies vor allem in Fig. 3 angedeutet ist, ineinander geschachtelte Dämpferfedern 66 eingesetzt werden. Auf diese Art und Weise kann durch die parallele Wirksamkeit der Federn die Dämpfungscharakteristik beeinflusst werden und gleichzeitig auch für eine verschleppt einsetzende Wirkcharakteristik gesorgt werden.

Selbstverständlich ist es auch möglich, auch mehrere seriell zueinander wirkende Sätze von Dämpferfedern 66 bereitzuhalten.

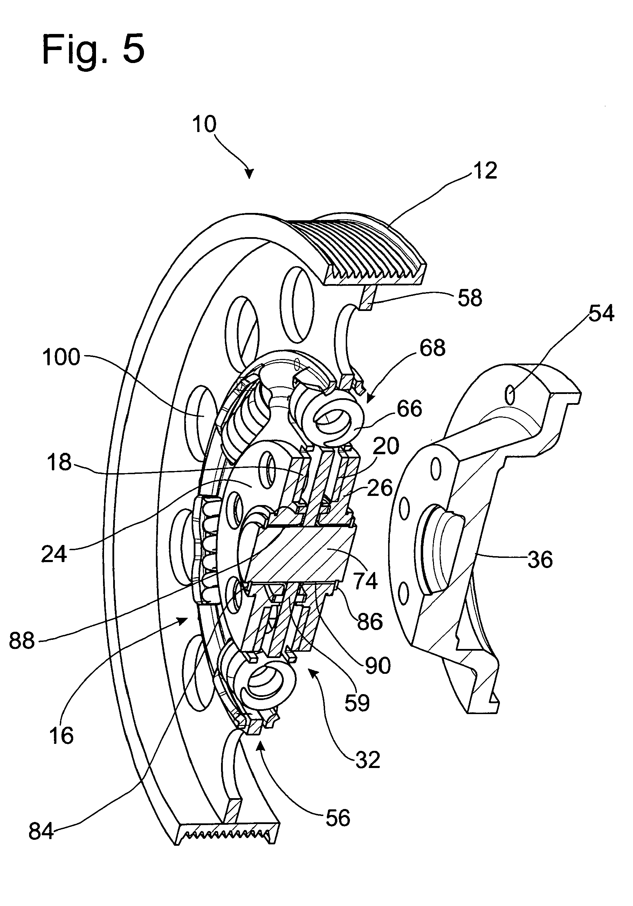

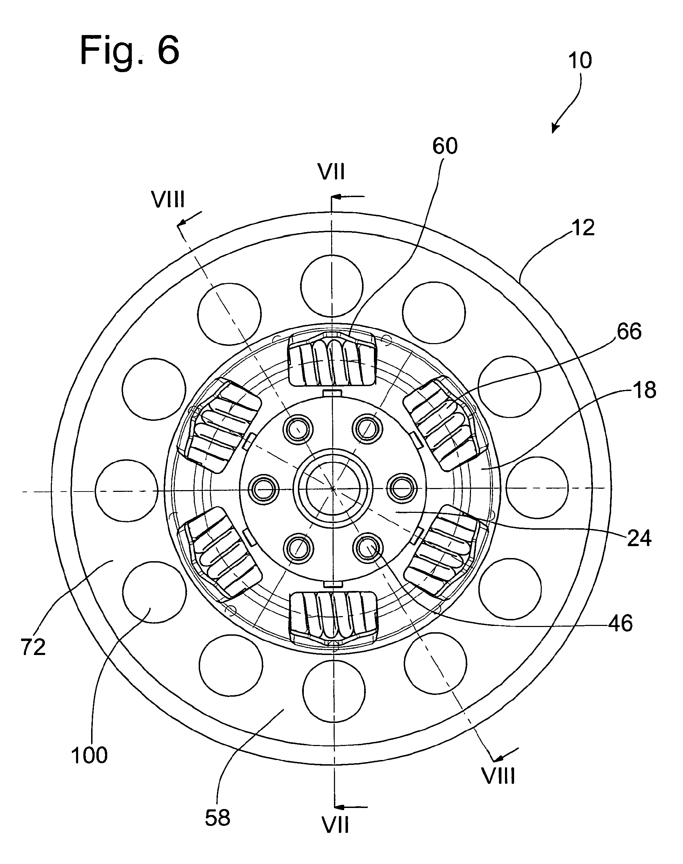

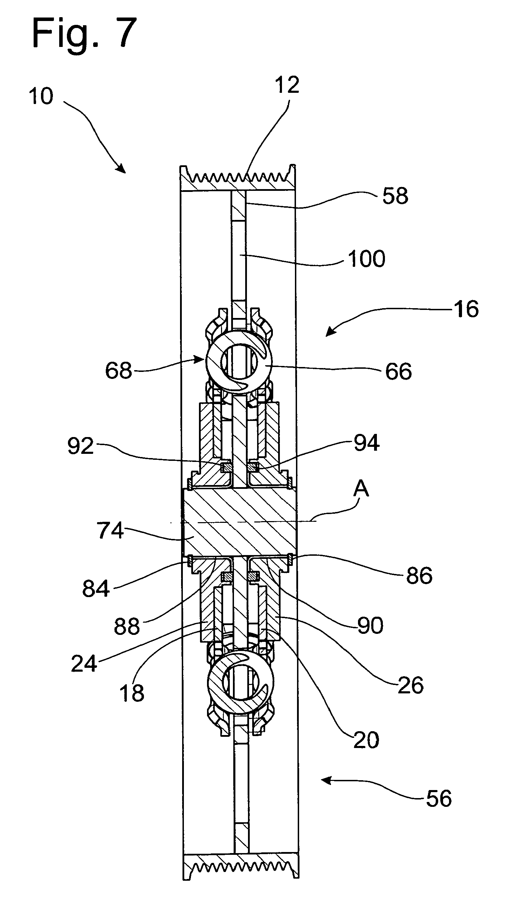

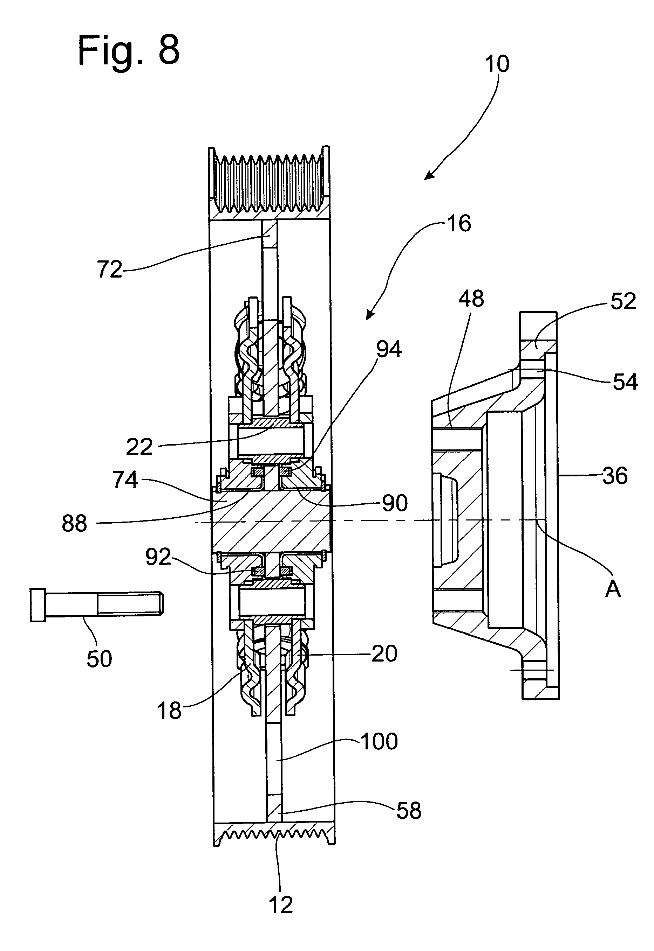

Eine abgewandelte Ausgestaltungsform einer erfindungsgemäßen Antriebsscheibe ist in den Fig. 5 bis 8 gezeigt. Dabei entsprechen mit gleichen Bezugszeichen bezeichnete Baugruppen oder Komponenten hinsichtlich Aufbau bzw. Funktion den vorangehend beschriebenen, so dass auf diese Ausführungen verwiesen werden kann. Im Folgenden wird lediglich auf die mit Hinblick auf die vorangehend beschriebene Ausgestaltungsform bestehenden Unterschiede eingegangen. Diese liegen primär in der Art und Weise, wie das Zentralscheibenelement 58 mit dem Antriebsring 12 verbunden ist. Man erkennt vor allem in den Fig. 7 und 8, dass das Zentralscheibenelement 58, welches auch hier wieder im Wesentlichen planar ausgebildet ist, im axialen Mittenbereich des Antriebsrings 12 an der Innenseite desselben angebracht ist, beispielsweise durch Verschweißung, beispielsweise aber auch durch integrale Ausgestaltung. Hier ist grundsätzlich also nicht die vorangehend beschriebene Variabilität gegeben, wenngleich der Aufbau etwas vereinfacht ist. Um an der Ausgangsseite 56 eine Gewichtseinsparung zu erlangen, können hier im Zentralscheibenelement 58 radial außerhalb des Bereichs, in dem dieses mit den Dämpferfedern 66 in Wechselwirkung tritt, Öffnungen 100 vorgesehen sein.

Ansonsten entspricht hinsichtlich Ausgestaltung und Funktionalität die in den Fig. 5 bis 8 dargestellte Antriebsscheibe 10 der vorangehend beschriebenen.

## Patentansprüche

1. Antriebsscheibe zum Antreiben eines Nebenaggregats durch eine Antriebswelle eines Antriebsaggregats, wobei die Antriebsscheibe (10) eine Torsionsschwingungsdämpferanordnung (16) umfasst mit einem mit der Antriebswelle zu koppelnden Eingangsbereich (32) und einem durch eine Dämpferelementenanordnung (68) zur Drehung um eine Drehachse (A) mit dem Eingangsbereich (32) gekoppelten Ausgangsbereich (56), wobei der Eingangsbereich (32) zwei in Abstand zueinander angeordnete Deckscheibenelemente (18, 20) beidseits eines Zentralscheibenelements (58) des Ausgangsbereichs (56) umfasst, wobei das Zentralscheibenelement (58) an seinem radial inneren Endbereich (59) ein bezüglich der Deckscheibenelemente (18, 20) radial abgestütztes Lagerungselement (74) aufweist und in seinem radial äußeren Endbereich (72) mit einem Antriebsring (12) verbunden ist.

2. Antriebsscheibe nach Anspruch 1,
**dadurch gekennzeichnet, dass** der Ausgangsbereich (56) in Zuordnung zu jedem Deckscheibenelement (18, 20) eine Klemmscheibe (24, 26) aufweist, wobei die Klemmscheiben (24, 26) an den Außenseiten der Deckscheibenelemente (18, 20) angeordnet sind und die Deckscheibenelemente (18, 20) unter Zwischenlagerung von Distanzelementen (22) aufeinander zu pressen.

3. Antriebsscheibe nach Anspruch 2,
**dadurch gekennzeichnet, dass** jede Klemmscheibe (24, 26) eine zentrale Stützaussparung (76, 78) für das Lagerungselement (74) aufweist.

4. Antriebsscheibe nach Anspruch 3,
**dadurch gekennzeichnet, dass** das Lagerungselement (74) die Stützaussparungen (76, 78) der Klemmscheiben (24, 26) durchsetzt und dass an über die Klemmscheiben (24, 26) überstehenden axialen Endbereichen (80, 82) des Lagerungselements (74) Axialsicherungselemente (84, 86) für die Klemmscheiben (24, 26) vorgesehen sind.

5. Antriebsscheibe nach Anspruch 2, 3 oder 4,
**dadurch gekennzeichnet, dass** das Zentralscheibenelement (58) im Bereich jedes Distanzelements (22) eine langgestreckte Umfangsaussparung aufweist und mit seinem radial inneren Endbereich (59) radial innerhalb der Distanzelemente (22) liegt.

6. Antriebsscheibe nach einem der Ansprüche 2 bis 5,
**dadurch gekennzeichnet, dass** wenigstens ein Teil der Distanzelemente (22) mit einer Durchgangsöffnung ausgebildet ist zur Hindurchführung eines Schraubbolzens (50), wobei die Schraubbolzen (50) die Klemmscheiben (24, 26) mit den dazwischen angeordneten Deckscheibenelementen (18, 20) und Distanzelementen (22) aufeinander zu pressen.

7. Antriebsscheibe nach einem der Ansprüche 2 bis 5,
**dadurch gekennzeichnet, dass** an jeder Klemmscheibe (24, 26) ein das Zentralscheibenelement (58) axial abstützendes Axiallagerorgan (88, 90) vorgesehen ist.

8. Antriebsscheibe nach Anspruch 3 oder einem der Ansprüche 4 bis 7, sofern auf Anspruch 3 rückbezogen,
**dadurch gekennzeichnet, dass** an jeder Klemmscheibe (24, 26) ein das Lagerungselement (74) radial abstützendes Radiallagerorgan (88, 90) vorgesehen ist.

9. Antriebsscheibe nach Anspruch 7 und Anspruch 8,
**dadurch gekennzeichnet, dass** in Zuordnung zu jeder Klemmscheibe (24, 26) eine das Lagerungselement (74) und das Zentralscheibenelement (58) abstützende Axial/Radial-Lagerhülse (88, 90) vorgesehen ist.

10. Antriebsscheibe nach Anspruch 6 oder einem der Ansprüche 7 bis 9, sofern auf Anspruch 6 rückbezogen,
**dadurch gekennzeichnet, dass** an den Außenseiten der Klemmscheiben (24, 26) Abdeckscheiben (34, 36) vorgesehen sind, wobei die Schraubbolzen (50) an den Abdeckscheiben (34, 36) angreifen.

11. Antriebsscheibe nach Anspruch 12,
**dadurch gekennzeichnet, dass** eine der Abdeckscheiben (34, 36) einen Befestigungsbereich (52, 54) zur Festlegung derselben bezüglich einer Antriebswelle aufweist.

12. Antriebsscheibe nach Anspruch 4 und einem der Ansprüche 10 oder 11,
**dadurch gekennzeichnet, dass** die Abdeckscheiben (34, 36) die Stützaussparungen (76, 78) der Klemmscheiben (24, 26) vollständig überdecken.

13. Antriebsscheibe nach einem der Ansprüche 1 bis 12,
**dadurch gekennzeichnet, dass** an jeder axialen Seite des Zentralscheibenelements (58) ein Abdichtelement (92, 94) vorgesehen ist, durch welches zwischen dem Zentralscheibenelement (58) und der Eingangsseite (32) ein gegen den Durchtritt von Verunreinigungen dichter Abschluss gebildet ist.

14. Antriebsscheibe nach einem der Ansprüche 1 bis 13,
**dadurch gekennzeichnet, dass** das Zentralscheibenelement (58) mit dem Lagerungselement (74) materialschlüssig oder/und formschlüssig verbunden ist.

15. Antriebsscheibe nach einem der Ansprüche 1 bis 13,
**dadurch gekennzeichnet, dass** das Zentralscheibenelement (58) mit dem Lagerungselement (74) integral ausgebildet ist.

16. Antriebsscheibe nach einem der Ansprüche 1 bis 15,
**dadurch gekennzeichnet, dass** das Zentralscheibenelement (58) mit dem Antriebsring (12) in einem axialen Mittenbereich des Antriebsrings (12) integral oder materialschlüssig verbunden ist.

17. Antriebsscheibe nach einem der Ansprüche 1 bis 15,
**dadurch gekennzeichnet, dass** der Antriebsring (12) einen nach radial innen ragenden Befestigungsbereich (70) zur Festlegung an dem radial äußeren Endbereich (72) des Zentralscheibenelements (58) aufweist.

18. Antriebsscheibe nach Anspruch 17,
**dadurch gekennzeichnet, dass** der Befestigungsbereich (70) an dem Antriebsring (12) bezüglich eines axialen Mittenbereichs desselben versetzt vorgesehen ist.
